# EUROPEAN PATENT APPLICATION

(11) **EP 3 669 965 A2**
(43) Date of publication of application: **24.06.2020**
(21) Application number: 19219028.8
(22) Date of filing: 20.12.2019
(51) Int. Cl.: B01D 45/14, B04B 5/12, B04B 7/14, F01M 13/04

(54) **COMPRESSOR CENTRIFUGAL FILTER DISC AND ASSEMBLY**

(30) Priority: 20.12.2018 US 201816227855
(71) Applicant: Ingersoll-Rand Company, Davidson, NC 28036 (US)
(72) Inventor: SHANOV, Adrian, Charlotte, NC North Carolina 28202 (US)
(74) Representative: Haseltine Lake Kempner LLP

(57) **Abstract**

A centrifugal filter assembly useful to remove lubricant from a mixed flow exiting a breather of a lubricated compressor. The centrifugal filter assembly can include a stack of filter discs disposed in a housing. The housing can have a threaded opening to be fastened to the breather. A center support including a central shaft and arms are used to mount the discs. The discs can include flow guide and gap setting features. Mixed air can enter an inner hub of the filter stack and then progress in the space between filter discs until exiting the stack at a radially outer location. The mixed air can be received into the inner hub after first passing through a bearing used to support the center support, but other routes into the inner hub are also contemplated.

## Description

### TECHNICAL FIELD

The present invention generally relates to compressors having a breather, and more particularly, but not exclusively, to centrifugal filtering of a mixed flow exiting a breather of a compressor.

### BACKGROUND

Removing unwanted lubricant from a flow exiting a breather of a compressor remains an area of interest. Some existing systems have various shortcomings relative to certain applications. Accordingly, there remains a need for further contributions in this area of technology.

### SUMMARY

One embodiment of the present invention is a unique centrifugal filter for a breather of a compressor. Other embodiments include apparatuses, systems, devices, hardware, methods, and combinations for filtering flow of gas and lubricant from a breather of a lubricated compressor. Further embodiments, forms, features, aspects, benefits, and advantages of the present application shall become apparent from the description and figures provided herewith.

### BRIEF DESCRIPTION OF THE FIGURES

FIG. 1 depicts an embodiment of a compressor with a breather port and filter.
FIG. 2 depicts an embodiment of a centrifugal filter for a compressor breather port.
FIG. 3 depicts an embodiment of a center support
FIG. 4 depicts an embodiment of a center support.
FIG. 5 depicts an embodiment of a center support and filter discs.
FIG. 6 depicts an embodiment of a center support and filter discs.
FIG. 7 depicts an embodiment of a center support and filter discs.
FIG. 8 depicts an embodiment of a center support and filter discs.
FIG. 9 depicts an embodiment of a center support and filter discs.
FIG. 10 depicts an embodiment of a center support and filter discs.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

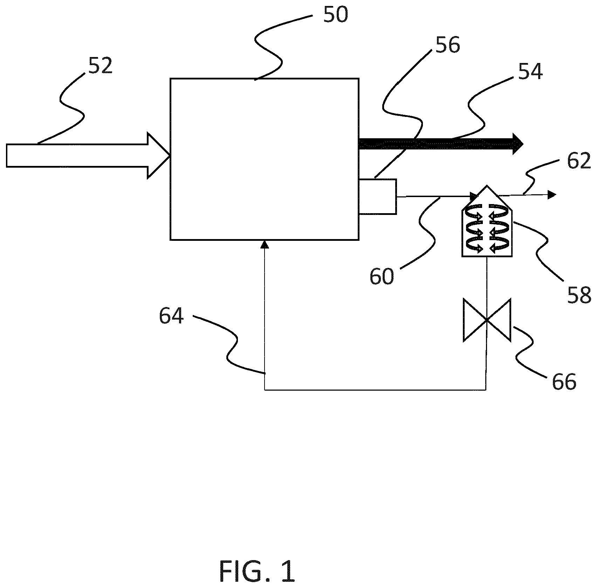

With reference to FIG. 1, a compressor 50 is disclosed which is useful to receive an incoming flow of gas 52 and compress it to provide a compressed gas 54. The gas which can be compressed by the compressor 50 can be air, but also can take on any other form of compressible gas. The compressor 50 can be used in a variety of application and can take many different forms. In some applications the compressor 50 is used to provide a flow of compressed gas to end users, such as those that might need compressed gas for pneumatic tools, facility air, process gas, etc. The compressor 50 can take the form of a screw compressor, whether oil free or contact cooled, centrifugal compressor, etc. In any of the various types of compressors it will be appreciated that moving components within those types will often require the use of lubrication. Such moving parts can include rolling element bearings and gears, to set forth just a few examples, the sum of which are used to both provide support for the compressor 50 and its components as well as transmit power from a power source to the rotating compression elements (e.g. the screw rotors, centrifugal compressor wheel, etc).

The compressor 50 includes a breather port 56 in fluid communication with a mechanical component working space of the compressor. Such mechanical component working space will be understood to include the space which houses the moving parts of the compressor 50 such as the rolling element bearings, gears, etc. The breather port 50 is useful to permit the ingress and egress of gases between ambient and the mechanical component working space as the compressor heats up, cools down, and is operated. In some instances gases may egress from the compressor 50 and entrain a flow of lubricant used for the moving parts. The lubricant that flows from the breather port 50 can take many different forms such as lubricant droplets. In one form the lubricant is an oil, but other types of lubricant are also contemplated.

The system in FIG. 1 further includes a centrifugal filter 58 which receives a mixed flow 60 of gas and lubricant from the breather port 50, processes the mixed flow 60 to remove lubricant, and expel in an exiting flow 62. Further details of the centrifugal filter 58 are described further below. The system in FIG. 1 can optionally include a lubricant return 64 coupled with a valve 66 to provide lubricant recovered from the mixed flow 60 back to the compressor 50. The valve 66 can be manually and/or automatically activated, and can be mechanical, electromechanical, etc.

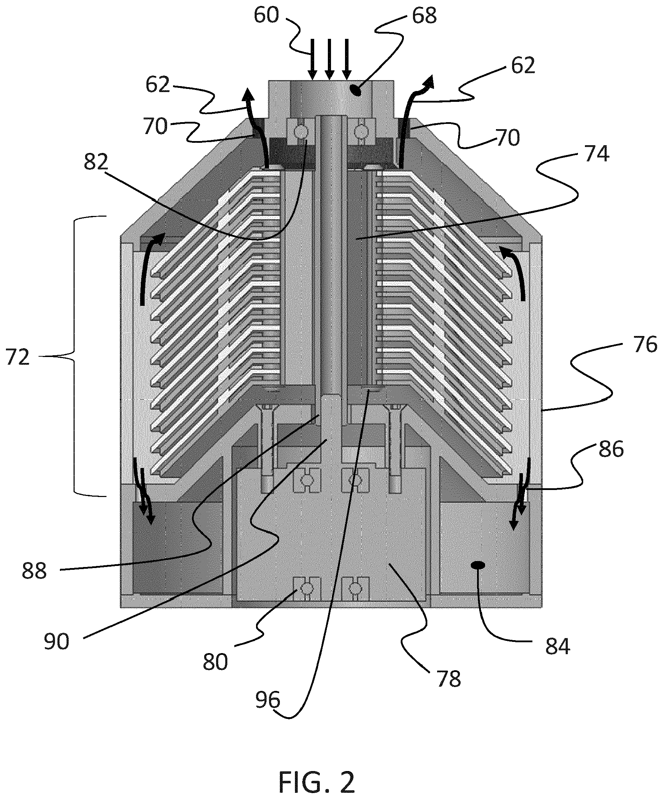

Turning now to FIG. 2, one embodiment of the centrifugal filter 58 is illustrated showing an incoming flow 60 of mixed gas and lubricant flowing through an inlet 68, and a cleaned remainder flow 62 exiting through outlets 70. As will be appreciated, the remainder flow 62 exiting the centrifugal filter 58 can include a completely cleaned flow in which no lubricant remains, but some embodiments can also include a reduced presence of lubricant. The inlet 68 can be connected to any suitable conduit, and in some forms can be connected directly to the breather port 56. To set forth just one non-limiting example, the breather port 56 can be a threaded connection to which a threaded inlet 68 can be directly connected. Any variety of connection is contemplated. The outlets 70 are shown as distributed near the inlet 68, but other embodiments can include one or more outlets 70 arranged in different locations. Furthermore, though the illustrated embodiment depicts two separate outlets 70, other embodiments can include fewer or greater numbers of outlets 70.

The centrifugal filter 58 includes a stack 72 of filter discs capable of being spun at sufficient speed to aid in centrifugal removal of lubricant from the mixed flow 60. The stack 72 is mounted to a center support 74, both of which spin within a housing 76 of the centrifugal filter 58. A motor 78 is coupled with the center support 74 to provide the motive force necessary to spin the stack 72 at speed. The motor 78 can be any suitable device, including an electric motor. Furthermore, the motor 78 can, but need not, be enclosed by the housing 76. The motor can be supported by one or more bearings 80, while the support 74 to which the motor 78 is attached can also be supported by bearings 82. The bearings 80 and/or 82 can take any variety of forms, including but not limited to ball bearings (e.g. rolling element bearings supported by an inner race and an outer race).

During operation the motor 78 can spin the stack 72 at speed to aid in pulling in the mixed flow 60 which flows down the length of the support 74, through the interstitial space between adjacent discs (described further below), up an outer pathway between a radially outer portion of the stack 72 and the housing 76, and to be discharged via the outlets 70. Lubricant that is separated can be collected at the bottom of the space in which the stack 72 rotates before being discharged, such as through recycling action of the return line 64. In the illustrated embodiment the centrifugal filter 58 can include a lubricant collection chamber 84 which pools the lubricant for removal (e.g. via 64 and 66). Passages 86 can be provided to permit collection of separated lubricant in the lubricant collection chamber 84. It will be appreciated that the mixed flow 60 can enter the space between the center support 74 and the discs via the bearing 82, for example the space between rolling elements of the bearing. In other forms the mixed flow 60 can enter the space between the center support 74 and the discs via a central passage in the center support (see below regarding the central shaft 94) and then exit to the space between the center support 74 and the discs via openings formed in the center support (e.g. openings formed in the central shaft 94).

The motor 78 can be coupled to the center support 74 through a sliding fit 88 as depicted in FIG. 2. The center support 74 can include an opening in a bottom portion to permit insertion of a shaft 90 coupled with the electric motor 78. In other forms the center support 74 can be received in an opening of the shaft 90 connected to the motor 78. The sliding fit can be further formed as a spline connection, among other connection types. In addition, the sliding connection can have a mechanical stop formed in one or both of the center support 74 and the shaft 90. At the top of the assembly, the center support 74 can be coupled directly to the bearing 82 (e.g. directly to the inner race 82).

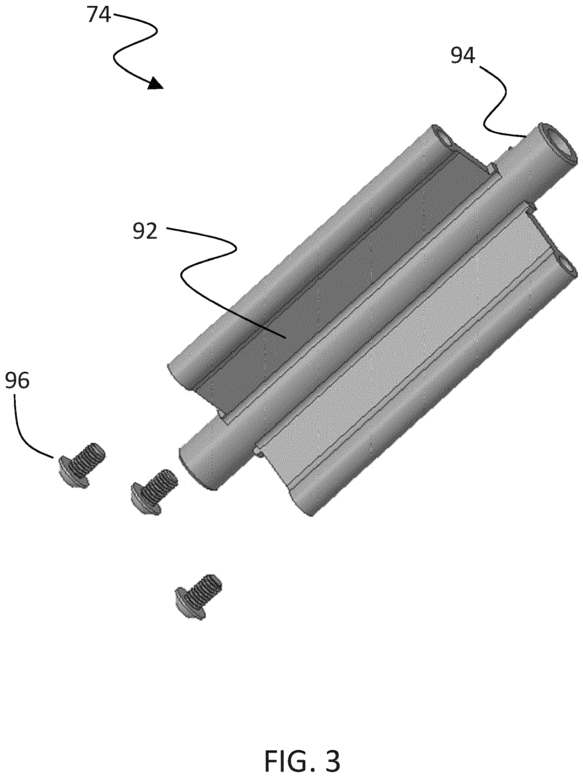

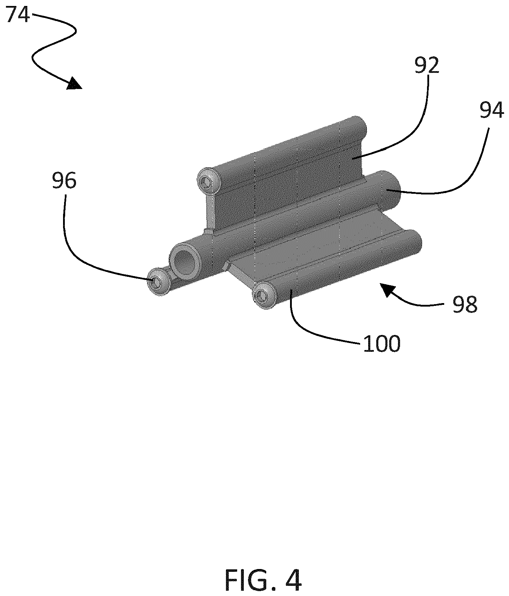

Turning now to FIGS. 3 and 4, an embodiment of the center support 74 which includes arms 92 extending from a central shaft 94. The illustrated embodiment include three separate arms 92, but other embodiments can include fewer or greater number of arms. The central shaft 94 can include a hollow interior in keeping with the description above of one embodiment of the center support 74. Alternatively the central shaft 94 can include an opening at one or both ends, with the intermediate location being solid. Fasteners 96 can be provided to secure individual discs to the central shaft 94 (see also FIG. 2). The central shaft 94 can extend beyond the length of the arms 92 as shown in the illustrated embodiment. In other embodiments, however, the central shaft 94 may not extend beyond the length of the arms 92.

The arms 92 generally extend to an ending which engages the individual discs. The ending can take a variety of shapes, and in the illustrated embodiment the endings 98 take the form of protrusions 100. The protrusions 100 generally extend beyond the width of the arm 92. In the illustrated embodiment the protrusions take a circular shape, but other embodiments can include different forms on one or more of the arms 92. The circular shape of the illustrated embodiment is shown as having a diameter which extends beyond the thickness of the arm 92.

Further to the above, the arms 92 can extend away from the central shaft 90 any variety of distances. As will be appreciated in the depiction in FIG. 2, since the mixed flow 90 traverses between the central shaft 94 and the discs, the distance that the arms 92 extend from the central shaft 94 can aid and/or impede movement of the mixed flow 60. In the illustrated embodiment, the arms extend away from the central shaft 94 by more than a cross sectional size of the central shaft (e.g. more than a diameter of a circular shaped central shaft 94).

The arms 92, endings 98, and central shaft 94 can be individually produced and fastened together in some forms. Such fastening can take any variety of forms whether mechanical or chemical bonding, to set forth just a few non-limiting examples. In some forms two or more of the arms 92, endings 98, and central shaft 94 can be formed as a unitary whole.

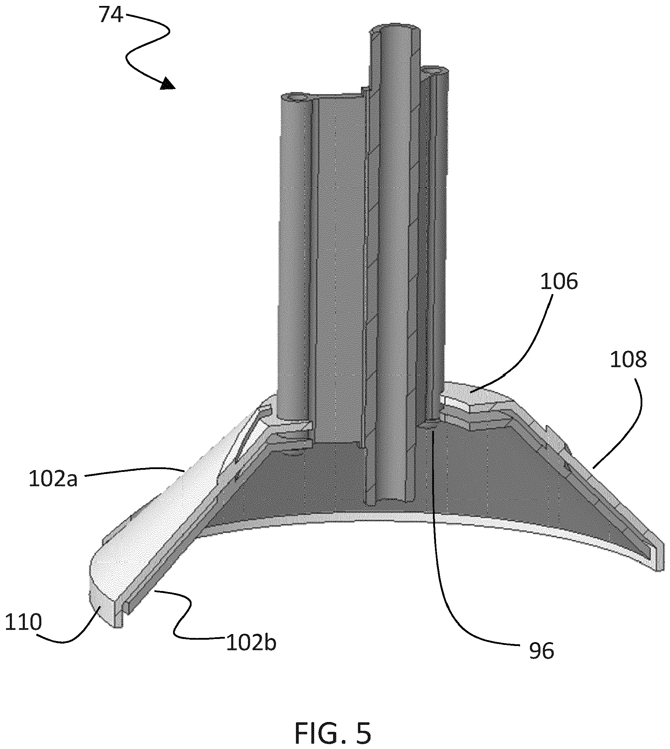

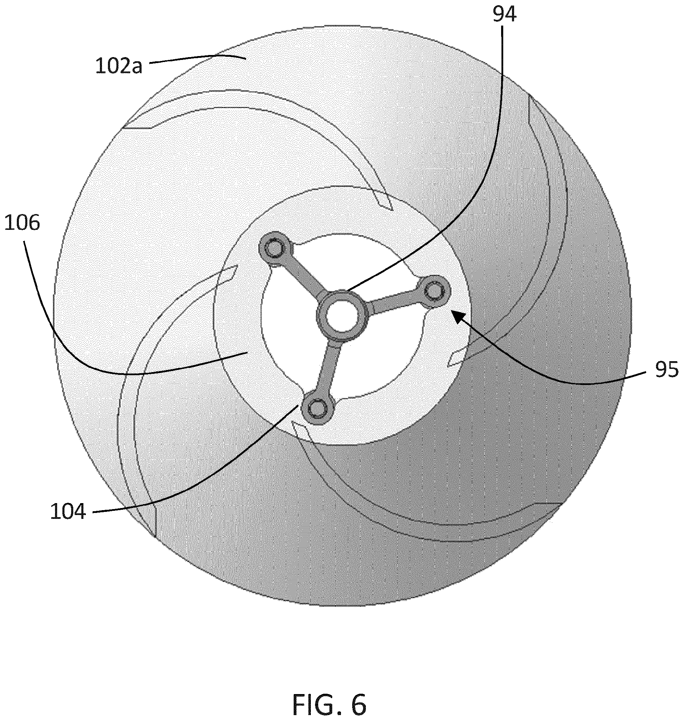

FIGS. 5 and 6 depict an embodiment of the center support 74 connected with two separate discs 102a and 102b. Each of the discs 102a and 102b are shown as coupled with the endings 95 in the arms 92. The discs 102a and 102b can be slidingly engaged with the endings 95 via recesses 104 formed in an inner hub 106 of each of the discs. The recesses 104 can take a form similar to the endings 98 associated with one or more of the arms 92. The fit between the endings 98 and 104 need not be perfect, but it will generally be understood that many embodiments will include a radius dimension to the radially outermost portion of the recess 104 will coincide closely with the radius that the ending 98 extends away from the axis of rotation of the center support 74.

The inner hub 106 forms a connection point with the arms 92, and in the illustrated embodiment the inner hub 106 is formed at an angle relative to a downward sloping working surface 108 of the discs 102a and 102b. The working surface 108 is generally conical shaped.

The discs used in the stack 72 can be identical in some embodiments, but in other embodiments the discs can be different. As shown in the illustrated embodiment of FIGS. 5 and 6, discs 102a and 102b have a number of similar features, but differ at least in a radially outer flange 110 formed in disc 102a but absent in disc 102b. Such a flange 110 can be useful to encourage downward travel of lubricant that has been centrifuged out of the mixed flow 60. Also different in the illustrated embodiment is the outer radial reach of each of discs 102a and 102b. The disc 102b can be radially shorter than the disc 102a.

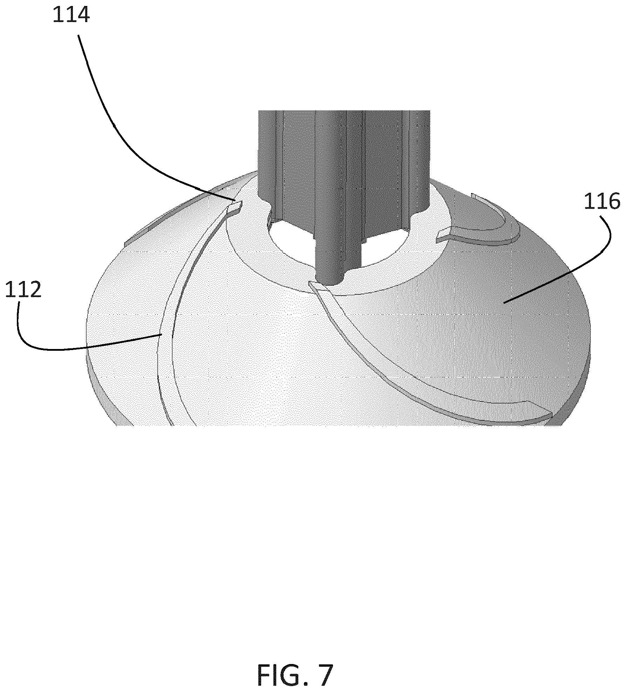

FIG. 7 depicts flow features formed in the disc 102a. The working surface 108 can include a flow guide 112 and a spacer 114. The flow guide 112 is useful to impart rotating motion to the mixed flow of gas and lubricant flowing between the discs. The flow guide 112 can take a variety of forms in any of the embodiments herein. In the illustrated form of FIG. 7 the flow guide 112 is formed as an outward extension from a pitch 116. The pitch 116 can be predominately and/or wholly featureless such that it is a generally flat surface. The outward extension can have a spiral shape as depicted, but any other shapes are also contemplated. The spiral shape can be concave side into the direction of spin, or convex side into the direction of spin. Furthermore, the outward extension can have any variety of cross sectional forms. In the illustrated embodiment the outward extension includes a quadrilateral shape, but other shapes are also contemplated. In one form the outward extension can contact an adjacent disc.

The spacer 114 can be formed to ensure an offset between neighboring discs. The spacer 114 can take on a variety of forms, and in one embodiment is an extension of the fluid guide 112 into the hub 106. In other forms the spacer 114 can be offset from the flow guide 112. In some forms the spacer 114 can be absent from the disc if the flow guide 112 serves as a useful gap setter.

Either or both of the flow guide 112 and spacer 114 can be formed in any surface of the discs (102a and/or 102b). The illustrated embodiment depicts the guide 112 and spacer 114 as being formed in the outer surface of the conical shaped discs. In other embodiments, one or both of the flow guide 112 and spacer 114 can be formed on the inner side of the conical shaped discs.

In some forms disc 102a can have different flow features from disc 102b. For example, disc 102a may have the flow guide 112 formed on both inner and outer conical sides (with or without the spacers 114) while disc 102b is featureless. The same is true of disc 102b, it could include flow guides 112 on both inner and outer surfaces with the disc 102b being largely featureless.

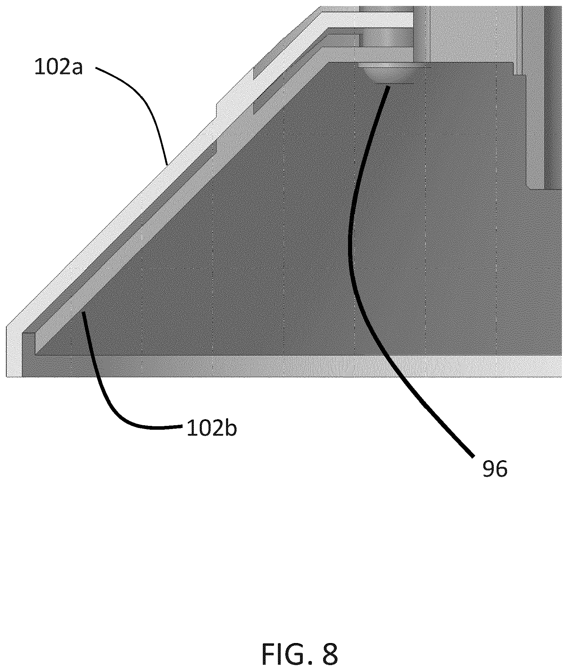

FIG. 8 depicts a cross sectional view of one embodiment of the discs 102a and 102b, along with the center support 74. A flow space can be seen as extending down the radial length of the discs 102a and 102b.

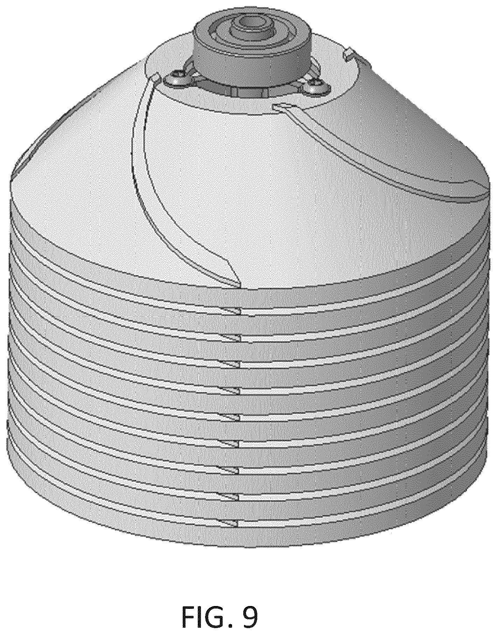

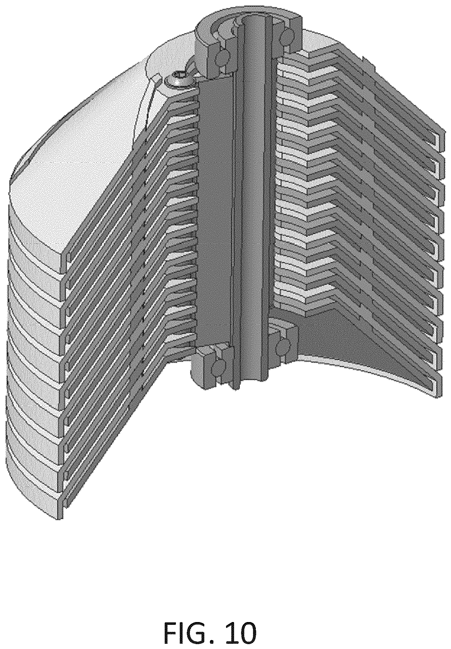

FIGS. 9 and 10 depict a full stack 72. FIG. 10 illustrates the central shaft 94 also engaged with an inner race of a ball bearing embodiment of bearing 82. FIG. 10 is also a depiction of an embodiment where the central shaft 94 is supported by a bearing at a lower end, as opposed to the earlier embodiment which depicted a shaft 90 being supported by a bearing.

Any of the center support 74 and discs can be made of plastic. Other material types are also contemplated herein. For example, in some embodiments the discs may be made out of a form of polyester resin used to make heat-resistant plastic films and sheets. One example of which is biaxially-oriented polyethylene terephthalate, a polyester film made from stretched polyethylene terephthalate. An example is a type of film dubbed "Mylar paper" available from DuPont.

The embodiments described herein are contemplated as being useful to remove lubricant particles as low as .15 micron, and in some embodiments as low as .1 microns.

The embodiments herein are also contemplated to have a construction which permits rotational rates of the disc stack 72 of 6,500 - 10,000 RPM.

One aspect of the present application includes an apparatus comprising: a centrifugal filter housing forming an open interior and having an inlet for receiving a flow of oil mist and air, a center support having an elongate main body structured to spin about an axis and disposed in the open interior of the centrifugal filter housing, the center support coupled with a plurality of arms each having a circumferential width and extending radially away from the main body, each of the plurality of arms having an end abutment surface, and a plurality of filter discs arranged sequentially along an axial length of the elongate main body, each of the plurality of filter discs having a plurality of recesses sized to receive the end abutment surface of each of the plurality of arms to form a complementary fit structured to encourage fixation of the plurality of the filter discs relative to the center support.

A feature of the present application includes wherein each of the plurality of arms coupled with a protrusion that extends circumferentially beyond the circumferential width of its respective arm of the plurality of arms.

Another feature of the present application includes wherein the protrusion is a cylindrical shape formed along the axial length of the at least one of the plurality of arms.

Still another feature of the present application includes wherein each arm includes an identical protrusion.

Yet another feature of the present application includes wherein the center support includes a cross sectional area having a width, wherein the at least one of the plurality of arms extends away from the center support a distance greater than the size of the width, and wherein a flow path is formed between the plurality of arms.

Still yet another feature of the present application includes wherein the center support is coupled to a motor on one end and a roller bearing element on the other, and wherein an inlet flow path formed to receive a mixed flow of oil and air is passed through interstitial spaces between the rolling elements of the roller bearing element.

Yet still another feature of the present application includes wherein the roller element bearing is a ball bearing.

A further feature of the present application includes wherein each filter disc of the plurality of filter discs includes a surface offset feature useful to abut and engage a neighboring disc to ensure a spacing interval between the adjacent discs.

A still further feature of the present application includes wherein the plurality of filter discs are arranged in an alternating arrangement with every other disc including an end flange.

A yet still further feature of the present application includes wherein the centrifugal filter housing includes have a threaded end adapted to fit a breather plug threaded connection of a compressor.

Another aspect of the present application includes an apparatus comprising: a centrifugal filter disc having an inner hub from which a conical filter element extends, the conical filter element having a flat pitch that follows a conical contour, the flat pitch interrupted by a plurality of flow guides that extend from a surface of the flat pitch, the inner hub oriented transverse to the flat pitch and having a plurality of gap setting features structured to abut a neighboring centrifugal filter disc to set a gap distance therebetween.

A feature of the present application includes wherein the inner hub of the centrifugal filter disc having an opening sized to receive a support structure, the opening having a rounded edge.

Another feature of the present application includes wherein the gap setting features are an extension of the plurality of flow guides.

Still another feature of the present application includes wherein the plurality of flow guides extend away from the flat pitch to aid in setting a gap distance with the neighboring centrifugal filter disc.

Yet another feature of the present application includes wherein the plurality of flow guides are formed as a spiral shape.

Still yet another feature of the present application includes wherein the flow guides are formed on an outer conical surface of the centrifugal filter disc.

Yet still another feature of the present application includes wherein the centrifugal filter disc includes a deflector flange formed in a radially outer end, the deflector flange turned to extend away from an inner conical surface of the centrifugal filter disc.

A further feature of the present application further includes a plurality of centrifugal filter discs to form a stack of centrifugal filter discs, the stack characterized by a disc configuration that alternates between a filter disc having the deflector and a filter disc without the deflector flange.

A still further feature of the present application includes wherein the plurality of flow guides extends from an outer conical side of the conical filter element.

A yet still further feature of the present application includes wherein the centrifugal filter disc is made of plastic.

While the invention has been illustrated and described in detail in the drawings and foregoing description, the same is to be considered as illustrative and not restrictive in character, it being understood that only the preferred embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

## Claims

1. An apparatus comprising:
a centrifugal filter housing forming an open interior and having an inlet for receiving a flow of oil mist and air;
a center support having an elongate main body structured to spin about an axis and disposed in the open interior of the centrifugal filter housing, the center support coupled with a plurality of arms each having a circumferential width and extending radially away from the main body, each of the plurality of arms having an end abutment surface; and
a plurality of filter discs arranged sequentially along an axial length of the elongate main body, each of the plurality of filter discs having a plurality of recesses sized to receive the end abutment surface of each of the plurality of arms to form a complementary fit structured to encourage fixation of the plurality of the filter discs relative to the center support.

2. The apparatus of claim 1, wherein each of the plurality of arms coupled with a protrusion that extends circumferentially beyond the circumferential width of its respective arm of the plurality of arms.

3. The apparatus of claim 2, wherein the protrusion is a cylindrical shape formed along the axial length of the at least one of the plurality of arms.

4. The apparatus of claim 3, wherein each arm includes an identical protrusion.

5. The apparatus of any of the preceding claims, wherein the center support includes a cross sectional area having a width, wherein the at least one of the plurality of arms extends away from the center support a distance greater than the size of the width, and wherein a flow path is formed between the plurality of arms.

6. The apparatus of any of the preceding claims, wherein the center support is coupled to a motor on one end and a roller bearing element on the other, and wherein an inlet flow path formed to receive a mixed flow of oil and air is passed through interstitial spaces between the rolling elements of the roller bearing element.

7. The apparatus of claim 6, wherein the roller element bearing is a ball bearing.

8. The apparatus of any of the preceding claims, wherein each filter disc of the plurality of filter discs includes a surface offset feature useful to abut and engage a neighboring disc to ensure a spacing interval between the adjacent discs.

9. The apparatus of claim 8, wherein the plurality of filter discs are arranged in an alternating arrangement with every other disc including an end flange.

10. The apparatus of any of the preceding claims, wherein the centrifugal filter housing includes a threaded end adapted to fit a breather plug threaded connection of a compressor.

11. An apparatus comprising:
a centrifugal filter disc having an inner hub from which a conical filter element extends, the conical filter element having a flat pitch that follows a conical contour, the flat pitch interrupted by a plurality of flow guides that extend from a surface of the flat pitch, the inner hub oriented transverse to the flat pitch and having a plurality of gap setting features structured to abut a neighboring centrifugal filter disc to set a gap distance therebetween.

12. The apparatus of claim 11, wherein the inner hub of the centrifugal filter disc has an opening sized to receive a support structure, the opening having a rounded edge.

13. The apparatus of claim 11 or 12, wherein the gap setting features are an extension of the plurality of flow guides.

14. The apparatus of any of claims 11 to 13, wherein the plurality of flow guides extend away from the flat pitch to aid in setting a gap distance with the neighboring centrifugal filter disc.

15. The apparatus of any of claims 11 to 14, wherein the plurality of flow guides are formed as a spiral shape.

16. The apparatus of any of claims 11 to 15, wherein the flow guides are formed on an outer conical surface of the centrifugal filter disc.

17. The apparatus of any of claims 11 to 16, wherein the centrifugal filter disc includes a deflector flange formed in a radially outer end, the deflector flange turned to extend away from an inner conical surface of the centrifugal filter disc.

18. The apparatus of claim 17, which further includes a plurality of centrifugal filter discs to form a stack of centrifugal filter discs, the stack **characterized by** a disc configuration that alternates between a filter disc having the deflector and a filter disc without the deflector flange.

19. The apparatus of any of claims 11 to 18, wherein the centrifugal filter disc is made of plastic.
